# EUROPÄISCHE PATENTSCHRIFT

(11) **EP 3 453 884 B1**
(45) Veröffentlichungstag und Bekanntmachung des Hinweises auf die Patenterteilung: **04.11.2020**
(21) Anmeldenummer: 17190093.9
(22) Anmeldetag: 08.09.2017
(51) Int. Cl.: F04D 19/04, B41M 5/24, B44C 1/22, F04D 29/02, F04D 29/058, F16C 41/00

(54) **VERFAHREN ZUM MARKIEREN EINES MAGNETRINGS EINES MAGNETLAGERS EINER VAKUUMPUMPE**
METHOD FOR MARKING A MAGNETIC RING OF A MAGNETIC BEARING OF A VACUUM PUMP
PROCÉDÉ DE MARQUAGE D'UN ANNEAU MAGNÉTIQUE D'UN PALIER MAGNÉTIQUE D'UNE POMPE À VIDE

(43) Veröffentlichungstag der Anmeldung: 13.03.2019
(73) Patentinhaber: PFEIFFER VACUUM GMBH, 35614 Asslar (DE)
(72) Erfinder: WIRTH, Adrian, 35582 Wetzlar (DE); KAHL, Joachim, 35584 Wetzlar/Naunheim (DE)
(74) Vertreter: Manitz Finsterwald Patent- und Rechtsanwaltspartnerschaft mbB

(56) Entgegenhaltungen:
- EP-A1- 2 829 757
- EP-A2- 1 477 695
- WO-A1-2011/076230
- DE-B3-102012 205 702

## Beschreibung

Die vorliegende Erfindung betrifft ein Verfahren zum Markieren eines Magnetrings eines Magnetlagers einer Vakuumpumpe, insbesondere einer Turbomolekularvakuumpumpe, und eine Vakuumpumpe mit einem Magnetlager, welches wenigstens einen Magnetring umfasst.

Ein beispielhaftes Magnetlager einer Vakuumpumpe umfasst eine Mehrzahl an Magnetringen, die richtungsabhängige Eigenschaften, wie z.B. die Polarität, aufweisen. Für eine Montage des Magnetlagers ist es daher üblich, Markierungen auf den Magnetringen vorzusehen, die die richtungsabhängigen Eigenschaften erkennen lassen. So schlägt beispielsweise die EP 1 477 695 A2 vor, den Richtungssinn eines Nord/Süd-Asymmetrieeffekts auf einem Ringmagneten eines Magnetlagers einer Vakuumpumpe zu markieren.

Im Stand der Technik werden derartige Markierungen beispielsweise mit einem Filzstift auf den Magnetring aufgebracht. Dies kann jedoch zu Verunreinigungen des Vakuums führen, insbesondere da Filzstiftmarkierungen im Allgemeinen durch Lösungsmittel löslich sind und ein Lösungsmittel bei der Montage der Vakuumpumpe häufig unentbehrlich ist. Außerdem kann gelöste Filzstiftfarbe verlaufen und/oder sichtbare Rückstände bilden.

Im Zusammenhang mit Wälzlagern lehrt die EP 2 829 757 A1, eine Beschriftung auf einen Lagerring aufzubringen, indem eine zinkhaltige Beschichtung auf den Lagerring aufgebracht wird und mittels eines Lasers die Beschriftung in die Beschichtung eingebracht wird.

Es ist eine Aufgabe der Erfindung, einen Magnetring eines Magnetlagers einer Vakuumpumpe ohne Beeinträchtigung der Vakuumerzeugung zu markieren.

Diese Aufgabe wird durch ein Verfahren gemäß Anspruch 1 gelöst, und insbesondere dadurch, dass eine Markierung auf einer Oberfläche des Magnetrings dadurch erzeugt wird, dass an der Oberfläche durch Erwärmung eine im Vergleich zur restlichen Oberfläche des Magnetrings unterschiedliche Oberflächeneigenschaft erzeugt wird.

Hierdurch kann auf Farbe verzichtet werden und die hiermit verbundenen Probleme werden vermieden. Durch Vermeiden von Farbe kann insbesondere ein Ausgasverhalten von, insbesondere in einem Hochvakuum befindlichen, Bauteilen, wie hier dem Magnetlager, reduziert werden. Dies verkürzt notwendige Abpumpzeiten und ermöglicht einen niedrigeren erreichbaren Enddruck. Auch kann so das Vakuum bzw. die Pumpe insgesamt sehr sauber gehalten werden. Außerdem ist die erfindungsgemäße Markierung lösungsmittelbeständig. Somit werden sichtbare Verläufe und Rückstände von der Markierung auch bei einem gegebenenfalls auftretenden Kontakt mit Lösungsmittel wirksam vermieden.

Die unterschiedliche Oberflächeneigenschaft kann beispielsweise ein unterschiedliches Gefüge und/oder eine unterschiedliche Rauigkeit umfassen. Die unterschiedliche Oberflächeneigenschaft ist sichtbar.

Bei einer Ausführungsform wird die Erwärmung mittels eines Lasers durchgeführt. Dies erlaubt eine besonders präzise und schnelle Markierung, insbesondere da hierdurch die Erwärmung der Oberfläche des Magnetrings präzise gesteuert werden kann. Dies erlaubt es auch, die Erwärmung lokal im Bereich der Markierung stark zu begrenzen. Da Magnete in ihrer magnetischen Eigenschaft üblicherweise sehr temperaturempfindlich sind, kann somit eine Entmagnetisierung zumindest im Wesentlichen oder annähernd vermieden werden. Falls eine Entmagnetisierung im Bereich der Markierung auftritt, kann diese bei geeigneter Wahl der Laserparameter gering gehalten werden. Es hat sich auch gezeigt, dass z.B. eine Markierung mittels Laser eine üblicherweise vorgenommene Kategorisierung der Magnetringe in Abhängigkeit von charakteristischen magnetischen, die Lager- und Pumpperformance betreffenden Größen nicht beeinflusst.

Bei geeigneter Positionierung der Markierung und Wahl der Laserparameter ist es möglich, keine negativen Einflüsse, wie z.B. eine Erwärmung durch Wirbelströme durch entstandene Magnetfeldinhomogenitäten, auf die Lager- und Pumpperformance zu erhalten. Die optimalen Laserparameter sind im Allgemeinen abhängig vom Fokusdurchmesser des Lasers und der Material- sowie Oberflächenbeschaffenheit des Magneten.

Als Laser kann beispielsweise ein Faser-, Dioden-, Festkörper- oder Gaslaser vorgesehen sein. Der Laser kann gepulst, insbesondere mit einer Pulsdauer im Nanosekundenbereich, oder im Dauerbetrieb arbeiten. Eine Wellenlänge des Lasers kann mit Vorteil wenigstens 700 nm, insbesondere wenigstens 1000 nm, und/oder höchstens 1500 nm, insbesondere höchstens 1100 nm, insbesondere etwa 1064 nm betragen. Besonders bevorzugt kann ein gepulster Faserlaser mit einer Wellenlänge von etwa 1064 nm und mit einer Pulsdauer im Nanosekundenbereich Verwendung finden.

Der Laser kann gemäß einer Ausführungsform mittels einer Ablenkeinheit, insbesondere eines Scanners, insbesondere 2D-Scanners, über die Oberfläche des Magnetrings schraffierend abgelenkt werden. Der Scanner kann beispielsweise einen oder mehrere Galvospiegel umfassen. Es kann eine Optik, insbesondere wenigstens eine Linse, für den Laser, insbesondere am Scanner oder an dessen Ausgang, vorgesehen sein, die eine Brennweite von wenigstens 5 cm, insbesondere wenigstens 20 cm, und/oder von höchstens 70 cm, insbesondere höchstens 50 cm aufweist. Ein Fokus des Lasers kann beispielsweise einen Durchmesser von wenigstens 0,02 und/oder höchstens 1 mm aufweisen. Die Ablenkeinheit kann den Laserstrahl beispielsweise zyklisch über die Oberfläche im Bereich der Markierung bewegen, diesen überstreichen und/oder schraffieren. Alternativ kann der Strahl des Lasers auch ohne Ablenkung auf die zu markierende Oberfläche gerichtet werden, wobei der Laser und/oder der Magnetring zur Herstellung einer flächigen Markierung bewegt wird.

Der Laser kann beim Markieren beispielsweise mit einer Leistung von wenigstens 10 und/oder höchstens 40 Watt, insbesondere wenigstens 20 und/oder höchstens 30 Watt, betrieben werden.
Eine Pulsfrequenz oder Repetitionsrate des Lasers beim Markieren kann beispielsweise wenigstens 50, insbesondere wenigstens 150 und/oder höchstens 400, insbesondere höchstens 250 kHz, insbesondere etwa 200 kHz, betragen. Alternativ kann beispielsweise ein kontinuierlich emittierender oder "CW"-Laser vorgesehen sein.

Es kann beispielsweise vorgesehen sein, dass der Laser die Erwärmung des Bereichs der Markierung, insbesondere schraffierend, wenigstens einmal und/oder höchstens 20 mal wiederholt. Insbesondere vorteilhaft sind beispielsweise wenigstens 2 und/oder höchstens 5 Markier- oder Schraffurdurchgänge. Bevorzugt kann eine Wiederholung wenigstens eines Markier- oder Schraffurdurchgangs in Bezug auf einen vorherigen Markier- oder Schraffurdurchgang gedreht erfolgen, beispielsweise um einen Drehwinkelschritt pro Wiederholung, insbesondere von wenigstens 5°, insbesondere wenigstens 10°, und/oder höchstens 180°, insbesondere höchstens 50°.

Weitere vorteilhafte Parameter des Markierens mittels Laser umfassen eine Vorschubgeschwindigkeit des Laserstrahls, insbesondere dessen Fokus, von wenigstens 50 mm/s, insbesondere wenigstens 500 mm/s und/oder höchstens 2500 mm/s, insbesondere höchstens 2000 mm/s, und/oder eine Vorschubgeschwindigkeit von wenigstens 100 mm/s und/oder höchstens 500 mm/s, insbesondere bei unbeschichteten Magneten, die seltene Erden umfassen.

Bei einer Weiterbildung wird der Laser und/oder der Magnetring derart ausgerichtet, dass die Markierung außerhalb einer Fokusebene des Lasers, insbesondere um einen Abstand von mindestens 0 mm und/oder höchstens 50 mm, insbesondere wenigstens 0 mm und/oder höchstens 30 mm, insbesondere wenigstens 0 mm und/oder höchstens 20 mm, insbesondere höchstens 10 mm, insbesondere höchstens 7 mm, außerhalb der Fokusebene, liegt.

Es ist vorteilhaft, wenn die Oberfläche nur so weit erwärmt wird, dass keine Gratbildung erfolgt. So bleibt die Oberfläche glatt und kann beispielsweise an einer Presspassung für die Magnetringe teilnehmen, ohne dass eine weitere Bearbeitung, wie z.B. ein Polieren, nötig wäre. Die vorstehend beschriebenen vorteilhaften Laserparameter begünstigen eine geringe Gratbildung bzw. können diese vollständig verhindern.

Die Erfindung sieht vor, dass der Magnetring zumindest im Bereich der Markierung frei von Beschichtungen ist und die Oberfläche im Bereich der Markierung angelassen aber nicht geschmolzen wird. Da hierbei das Magnetmaterial direkt und oberflächennah erwärmt wird und Hochleistungsmagnetmaterialen häufig nach einem Aufschmelzen nur inhomogen verfestigen und einen Grat ausbilden, lässt sich hierdurch unter Vermeidung von Gratbildung dennoch eine gut sichtbare Markierung erzeugen. Auch kann so eine Entmagnetisierung gering gehalten werden.

Der Magnetring kann insbesondere eine Kobaltlegierung umfassen. Auch kann der Magnetring Samarium oder andere Seltenerdelemente umfassen. Mit Vorteil umfasst der Magnetring SmCo5 oder Sm₂Co₁₇.

Bei einer Weiterbildung ist vorgesehen, dass die Markierung auf einer Außenfläche und/oder einer Stirnfläche des Magnetrings angeordnet ist. Diese lassen sich besonders einfach erfindungsgemäß erwärmen bzw. markieren, insbesondere durch einen Laser.

Mit Vorteil kann genau eine Markierung auf dem Magnetring vorgesehen sein. Beispielsweise umfasst das erfindungsgemäße Verfahren ferner ein Ermitteln von einer Magnetpolarität und einer weiteren richtungsabhängigen Eigenschaft des Magnetrings, insbesondere einer Fehlstelle, beispielsweise eines Winkelfehlers oder einer Inhomogenität oder einer Vorzugsrichtung hiervon. Dabei wird eine einzige Markierung aufgebracht, die sowohl die Polarität als auch die weitere richtungsabhängige Eigenschaft erkennen lässt.

Bei einem vorteilhaften Verfahren zum Herstellen einer Vakuumpumpe, welche ein Magnetlager mit mehreren Magnetringen umfasst, wird wenigstens ein Magnetring in Abhängigkeit von einer seiner Eigenschaften durch das erfindungsgemäße Markierungsverfahren markiert und der Magnetring wird in Abhängigkeit der Markierung in dem Magnetlager der Vakuumpumpe angeordnet.

Bei einer Weiterbildung dieses Herstellungsverfahrens ist vorgesehen, dass der Magnetring mittels einer Presspassung in der Vakuumpumpe befestigt wird und die Markierung zum Beispiel auf einer an der Presspassung beteiligten Fläche des Magnetrings angeordnet ist.

Die Aufgabe der Erfindung wird auch durch eine Vakuumpumpe nach dem unabhängigen Vorrichtungsanspruch gelöst, und insbesondere dadurch, dass der Magnetring an einer Oberfläche eine Markierung aufweist, wobei die Oberfläche im Bereich der Markierung eine im Vergleich zur restlichen Oberfläche des Magnetrings unterschiedliche Oberflächeneigenschaft aufweist.

Das erfindungsgemäße Markierungsverfahren lässt sich vorteilhaft auch im Sinne der hierin beschrieben Ausführungsformen des Herstellungsverfahrens und der Vakuumpumpe ausbilden und umgekehrt.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: zwei Magnetringe eines Magnetlagers der Turbomolekularpumpe der Fig. 2.

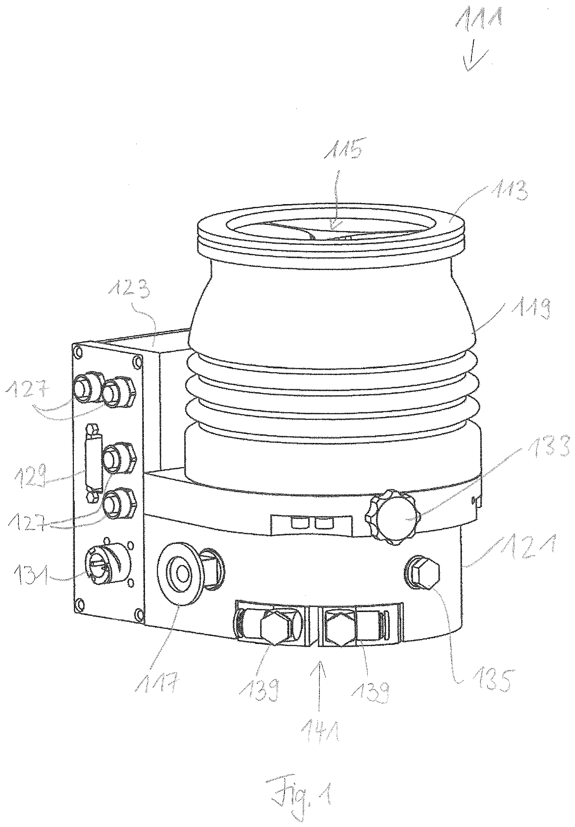

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

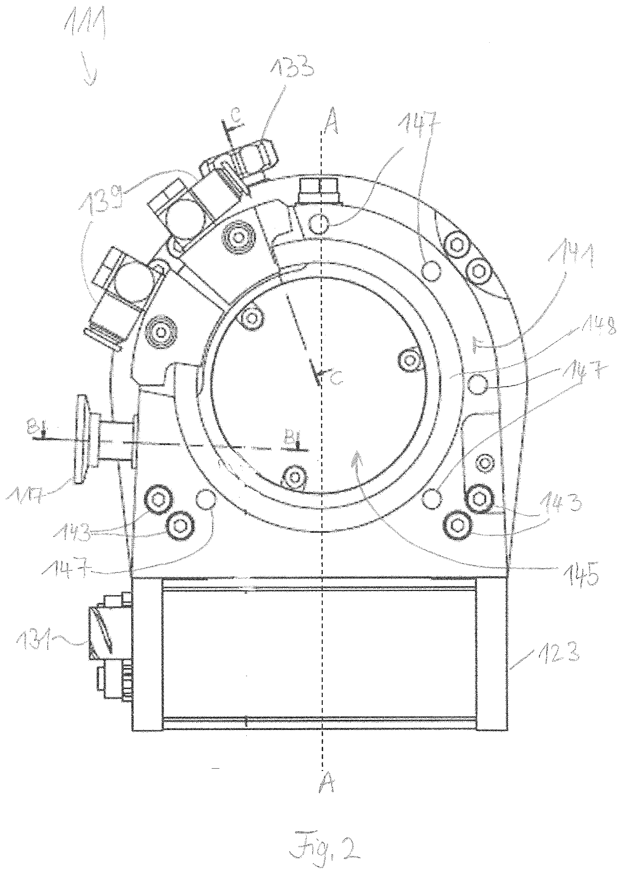

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

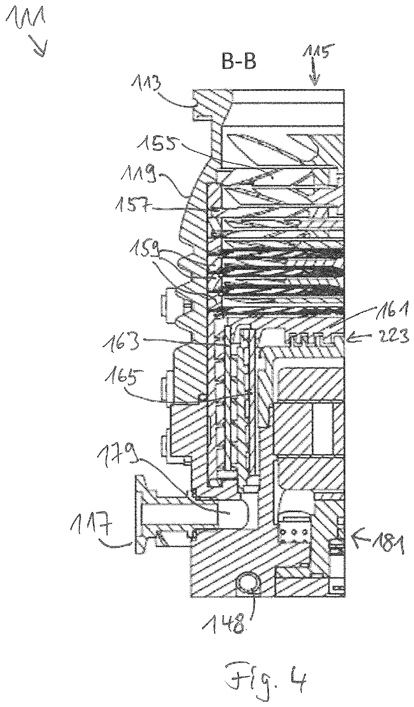

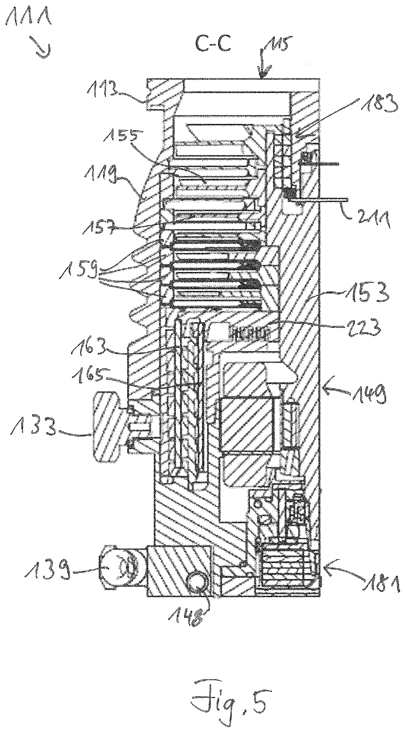

In den Figuren 2 bis 5 ist eine Kühlmittelleitung 148 dargestellt, in welcher das über die Kühlmittelanschlüsse 139 ein- und ausgeleitete Kühlmittel zirkulieren kann.

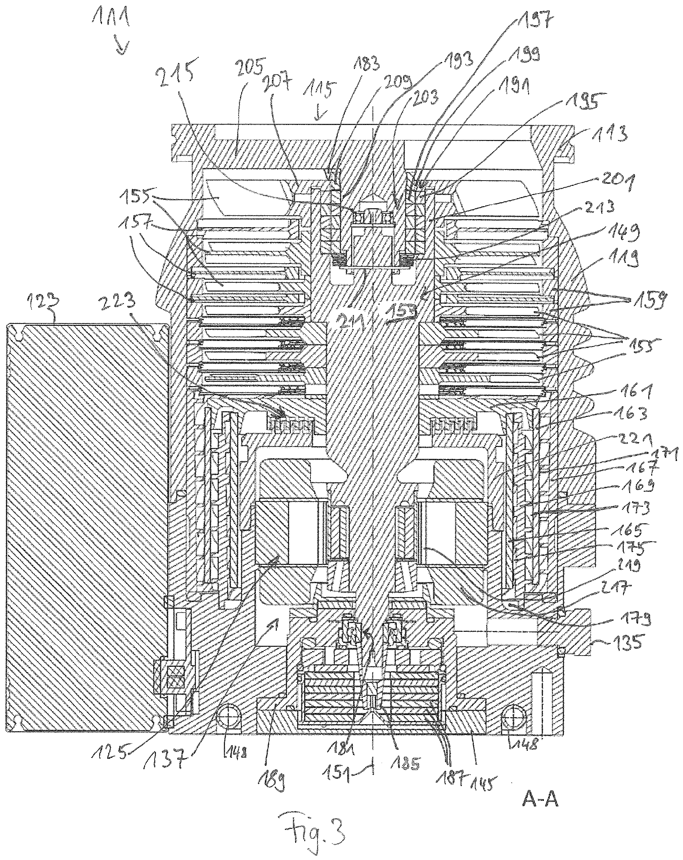

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben. Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

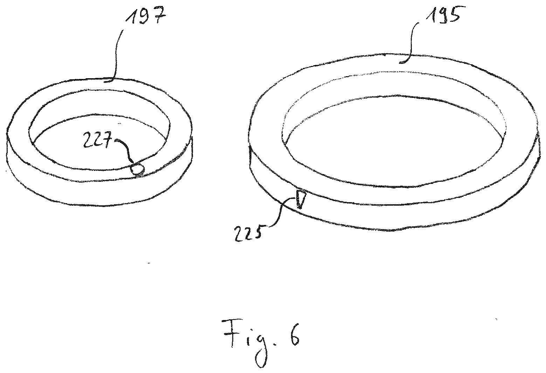

In Fig. 6 sind zwei Ringmagnete oder Magnetringe 195 und 197 gezeigt, welche jeweils eine Markierung 225 bzw. 227 aufweisen. Der Magnetring 195 ist ein äußerer Ring des in Fig. 3 gezeigten Magnetlagers 183. Der Magnetring 197 ist dagegen ein innerer Ring des Magnetlagers 183.

Der äußere Magnetring 195 weist die Markierung 225 an einer Außenseite auf. Der Magnetring 195 ist mit dem Trägerabschnitt 201 der Rotorwelle 153 über eine Presspassung verbunden, an welcher die markierte Außenseite des Magnetrings 195 teilnimmt.

Der innere Magnetring 197 weist seine Markierung 227 an einer Stirnseite auf. Im Betrieb ist zwischen der Innenseite des äußeren Magnetrings 195 und der Außenseite des inneren Magnetrings 197 der Lagerspalt 199 ausgebildet. Die Markierungen 225 und 227 sind also beide auf einer dem Lagerspalt abgewandten Seite angeordnet. Somit können gegebenenfalls durch die Markierungen 225 und 227 hervorgerufene Magnetisierungsverschlechterungen das Magnetfeld im Spalt nicht oder nur kaum beeinflussen. Die Markierungen 225 und 227 haben somit auch keinen oder kaum Einfluss auf die Laufeigenschaften des Rotors 149.

Die Markierungen 225 und 227 sind jeweils so angeordnet und ausgebildet, dass sie sowohl eine Magnetpolarität als auch eine weitere richtungsabhängige Eigenschaft, insbesondere einen Winkelfehler, einen Inhomogenitätsfehler und/oder eine vektorielle Vorzugsrichtung, des jeweiligen Magnetrings 195 bzw. 197 anzeigen. Dabei ist die Markierung 225 als Pfeil ausgebildet, der durch seine Richtung die Polarität und durch seine Position am Umfang des Magnetrings 195 eine weitere richtungsabhängige Eigenschaft und eine vektorielle Vorzugsrichtung anzeigt. Die Markierung 227 ist dagegen als Punkt ausgebildet, der durch seine axiale Position die Polarisierung und durch seine Position am Umfang des Magnetrings 197 die vektorielle Vorzugsrichtung anzeigt.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 225: Markierung
- 227: Markierung

## Patentansprüche

1. Verfahren zum Markieren eines Magnetrings (195, 197) eines Magnetlagers (183) einer Vakuumpumpe (111), insbesondere einer Turbomolekularvakuumpumpe, bei dem
eine Markierung (225, 227) auf einer Oberfläche des Magnetrings (195, 197) dadurch erzeugt wird, dass an der Oberfläche durch Erwärmung eine im Vergleich zur restlichen Oberfläche des Magnetrings (195, 197) unterschiedliche, sichtbare Oberflächeneigenschaft erzeugt wird,
wobei der Magnetring (195, 197) zumindest im Bereich der Markierung (225, 227) frei von Beschichtungen ist und die Oberfläche im Bereich der Markierung (225, 227) angelassen aber nicht geschmolzen wird.

2. Verfahren nach Anspruch 1,
**dadurch gekennzeichnet, dass**
die Erwärmung mittels eines Lasers durchgeführt wird, insbesondere mittels eines Faserlasers, insbesondere mit einer Pulsdauer im Nanosekundenbereich, und/oder mit einer Wellenlänge von etwa 1064 nm und/oder wobei insbesondere der Laser mittels eines Scanners über die Oberfläche des Magnetrings schraffierend abgelenkt wird und/oder wobei eine Optik für den Laser, insbesondere an einem Scanner, mit einer Brennweite zwischen 5 und 70 cm vorgesehen ist.

3. Verfahren nach Anspruch 2,
**dadurch gekennzeichnet, dass**
der Laser beim Markieren mit einer Leistung zwischen 10 und 40 Watt betrieben wird.

4. Verfahren nach Anspruch 2 oder 3,
**dadurch gekennzeichnet, dass** der Laser beim Markieren mit einer Pulsfrequenz zwischen 50 und 400 kHz betrieben wird.

5. Verfahren nach wenigstens einem der Ansprüche 2 bis 4,
**dadurch gekennzeichnet, dass** der Laser die Erwärmung des Bereichs der Markierung (225, 227) wenigstens einmal wiederholt.

6. Verfahren nach wenigstens einem der Ansprüche 2 bis 5,
**dadurch gekennzeichnet, dass** der Laser und/oder der Magnetring derart ausgerichtet wird, dass die Markierung (225, 227) außerhalb einer Fokusebene des Lasers, insbesondere um einen Abstand zwischen 0 und 20 mm außerhalb der Fokusebene, liegt.

7. Verfahren nach wenigstens einem der vorstehenden Ansprüche,
**dadurch gekennzeichnet, dass** die Oberfläche nur so weit erwärmt wird, dass keine Gratbildung erfolgt.

8. Verfahren nach wenigstens einem der vorstehenden Ansprüche,
**dadurch gekennzeichnet, dass** die Markierung (225, 227) auf einer Außenfläche und/oder einer Stirnfläche des Magnetrings (195, 197) angeordnet ist.

9. Verfahren nach wenigstens einem der vorstehenden Ansprüche,
**dadurch gekennzeichnet, dass** das Verfahren ferner ein Ermitteln von einer Polarität und einer weiteren richtungsabhängigen Eigenschaft des Magnetrings (195, 197) umfasst, wobei eine einzige Markierung (225, 227) aufgebracht wird, die sowohl die Polarität als auch die weitere richtungsabhängige Eigenschaft erkennen lässt, insbesondere indem die Markierung an einer Winkelposition des Magnetrings angeordnet wird, die derjenigen der richtungsabhängigen Eigenschaft entspricht.

10. Verfahren zum Herstellen einer Vakuumpumpe (111), welche ein Magnetlager (183) mit mehreren Magnetringen (195, 197) umfasst, bei dem:
wenigstens ein Magnetring (195, 197) in Abhängigkeit von einer seiner Eigenschaften durch ein Verfahren gemäß einem der vorhergehenden Ansprüche markiert wird und
der Magnetring (195, 197) in Abhängigkeit der Markierung in dem Magnetlager (183) der Vakuumpumpe angeordnet wird.

11. Verfahren nach Anspruch 10,
**dadurch gekennzeichnet, dass**
der Magnetring (195, 197) mittels einer Presspassung in der Vakuumpumpe (111) befestigt wird und die Markierung (225, 227) auf einer an der Presspassung beteiligten Fläche des Magnetrings (195, 197) angeordnet ist.

12. Vakuumpumpe (111) mit einem Magnetlager (183), welches mindestens einen Magnetring (195, 197) umfasst,
wobei der Magnetring (195, 197) an einer Oberfläche eine Markierung (225, 227) aufweist, wobei die Oberfläche im Bereich der Markierung (225, 227) eine im Vergleich zur restlichen Oberfläche des Magnetrings (195, 197) unterschiedliche, sichtbare Oberflächeneigenschaft aufweist,
wobei der Magnetring (195, 197) zumindest im Bereich der Markierung (225, 227) frei von Beschichtungen ist und die unterschiedliche Oberflächeneigenschaft dadurch hergestellt ist, dass die Oberfläche im Bereich der Markierung (225, 227) angelassen aber nicht geschmolzen wird.

## Claims

1. A method of marking a magnetic ring (195, 197) of a magnetic bearing (183) of a vacuum pump (111), particular of a turbomolecular vacuum pump, in which
a marking (225, 227) is created on a surface of the magnetic ring (195, 197) in that a visible surface property, which is different in comparison with the remaining surface of the magnetic ring (195, 197), is created at the surface by heating,
wherein the magnetic ring (195, 197) is free of coatings at least in the region of the marking (225, 227) and the surface is annealed, but not melted in the region of the marking (225, 227).

2. A method in accordance with claim 1,
**characterized in that**
the heating is carried out by means of a laser, in particular by means of a fiber laser, in particular with a pulse duration in the nanosecond range, and/or with a wavelength of approximately 1064 nm, and/or with in particular the laser being deflected by means of a scanner in a hatching manner over the surface of the magnetic ring, and/or with an optics having a focal length between 5 and 70 cm being provided for the laser, in particular at a scanner.

3. A method in accordance with claim 2,
**characterized in that**
the laser is operated at a power between 10 and 40 watts during the marking.

4. A method in accordance with claim 2 or claim 3,
**characterized in that**
the laser is operated at a pulse frequency between 50 and 400 kHz during the marking.

5. A method in accordance with at least one of the claims 2 to 4,
**characterized in that**
the laser repeats the heating of the region of the marking (225, 227) at least once.

6. A method in accordance with at least one of the claims 2 to 5,
**characterized in that**
the laser and/or the magnetic ring is/are oriented such that the marking (225, 227) is disposed outside a focal plane of the laser, in particular by a spacing between 0 and 20 mm outside the focal plane.

7. A method in accordance with at least one of the preceding claims,
**characterized in that**
the surface is only heated to the extent that a burr formation does not take place.

8. A method in accordance with at least one of the preceding claims,
**characterized in that**
the marking (225, 227) is arranged on an outer surface and/or on an end face of the magnetic ring (195, 197).

9. A method in accordance with at least one of the preceding claims,
**characterized in that**
the method further comprises determining a polarity and a further direction-dependent property of the magnetic ring (195, 197), with a single marking (225, 227) being applied which allows both the polarity and the further direction-dependent property to be recognized, in particular by arranging the marking at an angular position of the magnetic ring which corresponds to that of the direction-dependent property.

10. A method of manufacturing a vacuum pump (111) which comprises a magnetic bearing (183) having a plurality of magnetic rings (195, 197), in which:
at least one magnetic ring (195, 197) is marked in dependence on one of its properties by a method in accordance with any one of the preceding claims; and
the magnetic ring (195, 197) is arranged in the magnetic bearing (183) of the vacuum pump in dependence on the marking.

11. A method in accordance with claim 10,
**characterized in that**
the magnetic ring (195, 197) is fastened in the vacuum pump (111) by means of a press fit and the marking (225, 227) is arranged on a surface of the magnetic ring (195, 197) involved in the press fit.

12. A vacuum pump (111) having a magnetic bearing (183) which comprises at least one magnetic ring (195, 197),
wherein the magnetic ring (195, 197) has a marking (225, 227) at a surface, with the surface having a visible surface property, which is different in comparison with the remaining surface of the magnetic ring (195, 197), in the region of the marking (225, 227); and
wherein the magnetic ring (195, 197) is free of coatings at least in the region of the marking (225, 227) and the different surface property is produced in that the surface is annealed, but not melted in the region of the marking (225, 227).

## Revendications

1. Procédé de marquage d'un anneau magnétique (195, 197) d'un palier magnétique (183) d'une pompe à vide (111), en particulier d'une pompe à vide turbomoléculaire, dans lequel
un marquage (225, 227) est réalisé sur une surface de l'anneau magnétique (195, 197) par le fait de réaliser sur la surface, par chauffage, une propriété de surface visible qui est différente par comparaison au reste de la surface de l'anneau magnétique (195, 197), et
l'anneau magnétique (195, 197) est exempt de revêtements au moins dans la zone du marquage (225, 227), et la surface dans la zone du marquage (225, 227) est revenue mais non fondue.

2. Procédé selon la revendication 1,
**caractérisé en ce que**
le chauffage est effectué au moyen d'un laser, en particulier au moyen d'un laser à fibre, en particulier avec une durée d'impulsion dans la plage de nanosecondes, et/ou avec une longueur d'onde d'environ 1064 nm, et/ou en particulier le laser est dévié au moyen d'un scanner de manière hachurée sur la surface de l'anneau magnétique, et/ou
il est prévu une optique pour le laser, en particulier sur un scanner, avec une distance focale comprise entre 5 et 70 cm.

3. Procédé selon la revendication 2,
**caractérisé en ce que**
le laser fonctionne avec une puissance comprise entre 10 et 40 watts pendant le marquage.

4. Procédé selon la revendication 2 ou 3,
**caractérisé en ce que**
le laser fonctionne avec une fréquence d'impulsion comprise entre 50 et 400 kHz pendant le marquage.

5. Procédé selon l'une au moins des revendications 2 à 4,
**caractérisé en ce que**
le laser répète au moins une fois le chauffage de la zone du marquage (225, 227).

6. Procédé selon l'une au moins des revendications 2 à 5,
**caractérisé en ce que**
le laser et/ou l'anneau magnétique est/sont orienté(s) de telle sorte que le marquage (225, 227) se trouve à l'extérieur d'un plan focal du laser, en particulier à une distance comprise entre 0 et 20 mm à l'extérieur du plan focal.

7. Procédé selon l'une au moins des revendications précédentes,
**caractérisé en ce que**
la surface n'est chauffée que dans une mesure telle qu'aucune bavure ne se forme.

8. Procédé selon l'une au moins des revendications précédentes,
**caractérisé en ce que**
le marquage (225, 227) est disposé sur une surface extérieure et/ou sur une surface frontale de l'anneau magnétique (195, 197).

9. Procédé selon l'une au moins des revendications précédentes,
**caractérisé en ce que**
le procédé comprend en outre une détermination d'une polarité et d'une autre propriété dépendante de la direction de l'anneau magnétique (195, 197), un marquage unique (225, 227) étant appliqué qui permet à la fois de détecter la polarité et l'autre propriété dépendante de la direction, en particulier par le fait de placer le marquage à une position angulaire de l'anneau magnétique qui correspond à celle de la propriété dépendante de la direction.

10. Procédé de fabrication d'une pompe à vide (111) comprenant un palier magnétique (183) ayant plusieurs anneaux magnétiques (195, 197), dans lequel
au moins un anneau magnétique (195, 197) est marqué en fonction d'une de ses propriétés par un procédé selon l'une des revendications précédentes, et
l'anneau magnétique (195, 197) est placé dans le palier magnétique (183) de la pompe à vide en fonction du marquage.

11. Procédé selon la revendication 10,
**caractérisé en ce que**
l'anneau magnétique (195, 197) est fixé dans la pompe à vide (111) au moyen d'un ajustement serré, et le marquage (195, 197) est placé sur une surface de l'anneau magnétique (195, 197) impliquée dans l'ajustement serré.

12. Pompe à vide (111) comportant un palier magnétique (183) qui comprend au moins un anneau magnétique (195, 197),
dans laquelle
l'anneau magnétique (195, 197) présente un marquage (225, 227) sur une surface, et
dans la zone du marquage (225, 227) la surface présente une propriété de surface visible qui est différente par comparaison au reste de la surface de l'anneau magnétique (195, 197),
l'anneau magnétique (195, 197) est exempt de revêtements au moins dans la zone du marquage (225, 227), et
la surface dans la zone du marquage (225, 227) est revenue mais non fondue.
